# EUROPEAN PATENT APPLICATION

(11) **EP 1 225 365 A1**
(43) Date of publication of application: **24.07.2002**
(21) Application number: 02250122.5
(22) Date of filing: 09.01.2002
(51) Int. Cl.: F16D 69/02

(54) **Non-asbestos friction materials**

(30) Priority: 12.01.2001 JP 2001004832
(71) Applicant: Nisshinbo Industries, Inc., Chuo-ku, Tokyo 103-8650 (JP)
(72) Inventor: Saikatsu, Iwao, c/o Nisshinbo Industries Inc, Oura-gun, Gunma-ken (JP); Satoh, Yasuhiko, c/o Nisshinbo Industries Inc, Gunma-ken (JP)
(74) Representative: Stuart, Ian Alexander

(57) **Abstract**

A non-asbestos friction material is obtained by molding and curing a composition comprising a fibrous base other than asbestos, a binder and a filler. The fibrous base is composed in part of 1-15 vol % of inorganic fibers having a Mohs hardness of less than 4.5 and the filler includes 0.5-15 vol % of cashew dust, based on the overall composition. The friction material undergoes little wear during high-speed braking, has an excellent heat resistance, stable braking effectiveness and good strength, and generates little undesirable brake noise, especially when used as brake linings in drum brakes.

## Description

The present invention relates to non-asbestos friction materials. Preferred embodiments meet the performance requirements for both service brakes and parking brakes.

Drum brake friction materials used for braking in automobiles, large trucks, railroad cars and various industrial equipment are required to have a number of performance characteristics. These characteristics include not only excellent braking effectiveness (i.e., a high coefficient of friction), but also a high heat resistance, minimal squeaking or noise generation, and a sufficient strength to prevent cracks from forming when the friction material is bolted or riveted to the brake shoe.

Unlike in disk brakes, the brake shoe and brake lining in drum brakes are situated at the interior of the drum, making it difficult for heat generated during braking to dissipate to the exterior. As a result, the brake shoe and the friction material at the surface of the lining are scorched by heat, which greatly reduces braking effectiveness and tends to lead to brake fade. A strong desire thus exists for better heat resistance.

Cashew dust is a useful raw material which has proven to be indispensable in automotive friction materials, especially brake linings, for such purposes as improving wear resistance and braking effectiveness during ordinary use and for improving break-in during the initial period of use. For example, JP-A 63-62926 describes the incorporation of 7 wt % (about 16 to 18 vol %) of cashew dust, based on the overall friction material. Similarly, JP-A 2-269149 mentions the use of 20 vol % of cashew dust.

However, the use of a large amount of cashew dust to improve braking effectiveness and wear resistance lowers the heat resistance of the friction material, resulting in a rise in friction at high temperatures and inviting film formation on the mating surface of the drum against which the lining rubs during brake application, which in turn leads to the generation of undesirable brake noise.

On the other hand, the use of a large amount of hard fibers such as glass fibers for greater strength and toughness does improve braking effectiveness, but attacks the mating surface and tends to increase undesirable brake noise.

Requirements concerning the feel of the vehicle during braking, and especially undesirable brake squeaking and noise, have become increasingly rigorous in recent years. There exists a desire to minimize the generation of undesirable sounds due to swaying of the vehicle when someone gets in or out of the vehicle after the parking brake has been engaged.

Preferred embodiments of the invention may provide non-asbestos friction materials capable of meeting the performance requirements for both service brakes and parking brakes, that is, high-performance frictional materials which undergo little wear during high-speed braking, have excellent heat resistance, can assure stable braking effectiveness and good strength, do not cause brake noise due to rocking of the vehicle at the end of brake application, and minimize brake noise generation from swaying of the vehicle when someone gets in or out of the vehicle after the parking brake is engaged.

It has been found that by reducing the amount of cashew dust included as one of the organic fillers and using at the same time (i) a specific amount of soft inorganic fibers or (ii) a combination of hard inorganic fibers and soft inorganic fibers, the generation of brake noise, including low-frequency noise, can be effectively reduced while maintaining the strength and friction coefficient of the friction material.

More particularly, in connection with a non-asbestos friction material obtained by molding and curing a composition comprising a fibrous base other than asbestos, a binder and a filler, approach (i) incorporates as part of the fibrous base 1 to 15 vol % of inorganic fibers having a Mohs hardness of less than 4.5 and as one of the fillers 0.5 to 15 vol % of cashew dust (both amounts being based on the overall composition). Use of the soft inorganic fibers enables the organic film on the mating surface against which the friction material rubs during brake application to be removed without exacerbating attack of the mating surface or brake noise.

Moreover, in connection with a non-asbestos friction material obtained by molding and curing a composition comprising a fibrous base other than asbestos, a binder and a filler, approach (ii) incorporates as part of the fibrous base inorganic fibers having a Mohs hardness of less than 4.5 in combination with inorganic fibers having a Mohs hardness of at least 4.5 and as one of the fillers 0.5 to 15 vol % of cashew dust (based on the overall composition).
The combined use of two or more inorganic fibers having different Mohs hardnesses allows the characteristic features of each type of inorganic fiber to be fully manifested even at low respective contents, thus increasing the stability of the braking effectiveness.

It has also been found that both approaches (i) and (ii) provide high-performance non-asbestos friction materials for service brakes and parking brakes. Service brakes embodying the present invention can achieve low wear in high-speed braking, excellent heat resistance, stable braking effectiveness and good strength, and may not cause brake noise due to rocking of the vehicle at the end of brake application. Parking brakes may minimize brake noise from swaying of the vehicle when someone gets in or out of the vehicle after the parking brake is engaged.

Accordingly, in a first aspect, the invention provides a non-asbestos friction material obtained by molding and curing a composition comprising a fibrous base other than asbestos, a binder and a filler. The fibrous base is composed in part of 1 to 15 vol % of inorganic fibers having a Mohs hardness of less than 4.5, and the filler includes 0.5 to 15 vol % of cashew dust. Both amounts are based on the overall composition.

In a second aspect, the invention provides a non-asbestos friction material obtained by molding and curing a composition comprising a fibrous base other than asbestos, a binder and a filler. The fibrous base is composed in part of inorganic fibers having a Mohs hardness of less than 4.5 in combination with inorganic fibers having a Mohs hardness of at least 4.5, and the filler includes 0.5 to 15 vol % of cashew dust, based on the overall composition.

In the non-asbestos friction material of the second aspect of the invention, the inorganic fibers having a Mohs hardness of at least 4.5 account for preferably up to 80 vol % of the combined amount of inorganic fibers having a Mohs hardness of less than 4.5 and inorganic fibers having a Mohs hardness of at least 4.5.

In the non-asbestos friction material of the first or second aspect of the invention, the inorganic fibers having a Mohs hardness of less than 4.5 are typically of one or more type selected from among potassium titanate fibers, magnesium carbonate fibers, magnesium sulfate fibers and calcium carbonate fibers. The inorganic fibers having a Mohs hardness of at least 4.5 are preferably of one or more type selected from among glass fibers, rock wool, ceramic fibers and metal fibers. Moreover, the inorganic fibers typically have a length of 50 to 4,000 µm and a diameter of 5 to 60 µm.

### DETAILED DESCRIPTION OF THE INVENTION

The non-asbestos friction materials of the invention are made by molding and curing a non-asbestos friction material composition composed primarily of a fibrous base other than asbestos, a binder, and a filler. In the first aspect of the invention (i), the fibrous base is composed in part of 1 to 15 vol % of inorganic fibers having a Mohs hardness of less than 4.5 and the filler includes 0.5 to 15 vol % of cashew dust, based on the overall composition. In the second aspect of the invention (ii), the fibrous base is composed in part of inorganic fibers having a Mohs hardness of less than 4.5 in combination with inorganic fibers having a Mohs hardness of at least 4.5 and the filler includes 0.5 to 15 vol % of cashew dust, based on the overall composition.

In the first aspect of the invention (i), the fibrous base is composed in part of 1 to 15 vol %, and preferably 3 to 10 vol %, of soft inorganic fibers having a Mohs hardness of less than 4.5, based on the overall composition. Moreover, the filler includes 0.5 to 15 vol %, and preferably 1 to 10 vol %, of cashew dust, based on the overall composition.

Amounts of soft inorganic fibers having a Mohs hardness lower than 4.5 and of cashew dust which fall outside of the respective above ranges lead to inadequate braking effectiveness, poor heat resistance, increased wear, and the generation of undesirable brake noise or squeaking, thus making it impossible to achieve the objects and advantages of the invention.

Illustrative examples of suitable soft inorganic fibers having a Mohs hardness of less than 4.5 include potassium titanate fibers, magnesium carbonate fibers, magnesium sulfate fibers and calcium carbonate fibers. Any one or combination of two or more of these may be used. Potassium titanate fibers are especially preferred.

It is advantageous for the inorganic fibers to have a length of 50 to 4,000 µm, and especially 80 to 350 µm, and a diameter of 5 to 60 µm.

The cashew dust may be any cashew dust commonly used in friction materials, although one having an average particle size of 50 to 500 µm, and preferably 200 to 500 µm, and having a tar content of 6 to 12 wt %, is preferred.

In the second aspect of the invention (ii), the fibrous base is composed in part of inorganic fibers having a Mohs hardness of less than 4.5 in combination with inorganic fibers having a Mohs hardness of at least 4.5, preferably 4.5 to 8, and most preferably 6 to 8. In addition, the filler includes 0.5 to 15 vol %, and preferably 1 to 10 vol %, of cashew dust, based on the overall composition.

The inorganic fibers having a Mohs hardness of at least 4.5 account for up to 80 vol % of the combined amount of inorganic fibers having a Mohs hardness of less than 4.5 and inorganic fibers having a Mohs hardness of at least 4.5. The volumetric ratio of inorganic fibers having a Mohs hardness of less than 4.5 to inorganic fibers having a Mohs hardness of at least 4.5 is preferably from 1/2 to 30/1.

The combined amount of inorganic fibers having a Mohs hardness of less than 4.5 and inorganic fibers having a Mohs hardness of at least 4.5 is from 1 to 25 vol %, preferably 3 to 20 vol %, and most preferably 5 to 15 vol %, based on the overall friction material composition.

The soft inorganic fiber having a Mohs hardness of less than 4.5 and the cashew dust used in this aspect of the invention may be the same as those mentioned above for the first aspect of the invention. Illustrative examples of the inorganic fibers having a Mohs hardness of at least 4.5 include glass fibers, rock wool, ceramic fibers and metal fibers (e.g., iron, copper, brass, bronze, aluminum). Any one or combination of two or more of these may be used. The inorganic fibers have a length of preferably 50 to 4,000 µm, and especially 2,000 to 3,000 µm, and a diameter of 5 to 60 µm.

In addition to the above-described inorganic fibers, the fibrous base in the friction material composition according to either aspect of the invention may include also organic fibers commonly used in friction materials, such as nylon, polyester, rayon, phenolic or aramid fibers. The total amount of fibrous base (exclusive of inorganic fibers) included in the friction material composition is generally from 0 to 15 vol %, and preferably 2 to 12 vol %, based on the overall friction material composition.

The binder may be any known binder commonly used in friction materials. Illustrative examples include phenolic resins, melamine resins, epoxy resins, various types of modified phenolic resins (e.g., epoxy-modified phenolic resins, oil-modified phenolic resins, alkylbenzene-modified phenolic resins and cashew-modified phenolic resins), and acrylonitrile-butadiene rubber. Any one or combination of two or more of these may be used.

The amount of binder included in the composition is generally 10 to 25 vol %, and preferably 12 to 20 vol %, based on the overall friction material composition.

Organic fillers other than cashew dust that may be used include rubber powders of various types (e.g., rubber dust, melamine dust), and ground tire powder. Any one or combination of two or more thereof may be used.

The combined amount of such organic fillers is generally 5 to 35 vol %, and preferably 10 to 25 vol %, based on the overall friction material composition.

Illustrative examples of inorganic fillers that may used include molybdenum disulfide, antimony trisulfide, calcium carbonate, barium sulfate, magnesium oxide, graphite, calcium hydroxide, calcium fluoride, talc, molybdenum trioxide, antimony trioxide, zirconium silicate, iron oxide, mica, iron sulfide, zirconium oxide, metal powder, fused silica, silicon dioxide, alumina, chromium oxide and vermiculite. Any one or combination of two or more of these may be used.

The inorganic filler is added in an amount of 20 to 65 vol %, and preferably 35 to 55 vol %, based on the overall friction material composition.

The method of making the non-asbestos friction material of the invention involves uniformly blending given amounts of the above-described fibrous base, binder and filler in a suitable mixer such as a Henschel mixer, Loedige mixer or Eirich mixer, and preforming the blend in a mold. The preform is then molded at a temperature of 130 to 200°C and a pressure of 100 to 1,000 kg/cm² for a period of 2 to 10 minutes. The resulting molded article is postcured by heat treatment at 140 to 250°C for 2 to 48 hours, then spray-painted, baked and surface-ground as needed to give the finished article.

The non-asbestos friction materials of the invention can be used in such applications as disk pads, brake shoes and brake linings in automobiles, large trucks, railroad cars and various types of industrial equipment. In particular, they meet the performance requirements for both service brakes (used during drive) and parking brakes. When used in service brakes, the inventive friction materials are satisfactory with respect to braking effectiveness, frictional resistance, heat resistance, squeaking, strength, low-frequency noise generation, and mating surface attack. When used in parking brakes, the inventive friction materials minimize noise generation from swaying of the vehicle when someone gets in or out of the vehicle after the parking brake is engaged. While drum brakes are often used commonly as a service and parking brake in the case of compact car rear brakes, the inventive friction materials are well-suited for use as brake linings in such drum brakes.

### EXAMPLES

Examples of the invention and comparative examples are given below by way of illustration, and are not intended to limit the invention.

### Examples 1 to 11, and Comparative Examples 1 to 3

The friction material composition in each example was formulated as shown in Tables 1 and 2, then uniformly blended in a Loedige mixer and preformed in a pressure mold under a pressure of 100 kg/cm³ for 10 minutes. The preform was molded for the desired length of time at a temperature of 160° C and a pressure of 250 kg/cm², and post-cured by 5 hours of heat treatment at 200°C, yielding a brake lining for drum brakes.

The brake linings obtained in Examples 1 to 11 and Comparative Examples 1 to 3 were subjected to coefficient of friction measurements and to squeaking and noise tests and wear tests by the methods described below. The results are presented in Tables 1 and 2.

### Coefficient of Friction:

Measured in accordance with JASO C406.
Squeaking and Noise Generation Tests (in accordance with JASO C402)

The frequency of squeaking and the frequency of noise generation during braking were determined in a road vehicle test and rated as follows.
Very Good: incidence 1% or less
Good: incidence 3% or less
Fair: incidence less than 10%
Poor: incidence 10% or more

### Wear Test (according to JASO C406)

Test conditions were initial braking speed, 50 km/h; braking deceleration, 0.15 g; number of braking applications, 1,000 times; brake temperature before braking, 150°C. The amount of wear on the mating surface of the drum was rated as follows.
Very Good: slight wear (less than 100 µm)
Good: modest wear (100 to 200 µm)
Fair: substantial wear (200 to 300 µm)
Poor: very substantial wear (more than 300 µm)

**Table 1**

| | Example | | | | | | | |
|---|---|---|---|---|---|---|---|---|
| | 1 | 2 | 3 | 4 | 5 | 6 | 7 | 8 |
| Aramid fibers | 10 | 10 | 10 | 10 | 10 | 10 | 10 | 10 |
| Potassium titanate fibers | 3 | 5 | 7 | 15 | 10 | 7 | 5 | 3 |
| Glass fibers | 5 | 3 | 1 | - | - | - | - | - |
| Rock wool | - | - | - | - | - | - | - | - |
| Phenolic resin | 15 | 15 | 15 | 15 | 15 | 15 | 15 | 15 |
| Cashew dust | 7 | 5 | 3 | 10 | 7 | 5 | 3 | 10 |
| Other organic fillers | 15 | 15 | 15 | 15 | 15 | 15 | 15 | 15 |
| Inorganic fillers | 45 | 47 | 49 | 35 | 43 | 48 | 52 | 47 |
| Total (vol %) | 100 | 100 | 100 | 100 | 100 | 100 | 100 | 100 |
| Friction coefficient | 0.38 | 0.37 | 0.36 | 0.40 | 0.39 | 0.37 | 0.36 | 0.39 |
| Wear | good | good | good | very good | good | good | good | very good |
| Squeaking, Noise | good | good | very good | good | very good | very good | very good | good |

**Table 2**

| | Example | | | Comparative Example | | |
|---|---|---|---|---|---|---|
| | 9 | 10 | 11 | 1 | 2 | 3 |
| Aramid fibers | 10 | 10 | 10 | 10 | 5 | 5 |
| Potassium titanate fibers | 1 | 3 | 1 | - | 25 | 15 |
| Glass fibers | - | - | 1 | 15 | - | 5 |
| Rock wool | 5 | 3 | 1 | - | - | - |
| Phenolic resin | 15 | 15 | 15 | 15 | 20 | 20 |
| Cashew dust | 7 | 5 | 3 | 20 | 20 | 20 |
| Other organic fillers | 15 | 15 | 15 | 15 | - | - |
| Inorganic fillers | 47 | 49 | 54 | 25 | 30 | 35 |
| Total (vol %) | 100 | 100 | 100 | 100 | 100 | 100 |
| Friction coefficient | 0.38 | 0.37 | 0.36 | 0.42 | 0.41 | 0.42 |
| Wear | good | good | good | very good | very good | very good |
| Squeaking, Noise | very good | very good | very good | poor | poor | poor |

In Tables 1 and 2, the amount of each component is given in volume percent based on the overall composition. Individual items in the tables are described in further detail below.

### Inorganic Fibers

Potassium titanate fibers: Mohs hardness, 4; length, 150 µm; diameter, 30 µm
Glass fibers: Mohs hardness, 6; length, 3,000 µm; diameter, 10 µm
Rock wool: Mohs hardness, 6; length, 250 µm; diameter, 5 µm

### Other Organic Fillers

Ground tire rubber and rubber powder in a 1:1 volumetric ratio

### Inorganic Fillers

Slaked lime, 3 vol %; with the balance being calcium carbonate

The non-asbestos friction materials of the invention have the following advantages.
(1) Noise generation due to rocking of the vehicle at the end of brake application is markedly reduced.
(2) Noise generation due to swaying of the vehicle is greatly reduced.
(3) Heat resistance is improved.
(4) Braking effectiveness is stabilized.
(5) Attack of mating surface (drum) against which friction takes place is reduced.

Japanese Patent Application No. 2001-004832 is incorporated herein by reference.

Although some preferred embodiments have been described, many modifications and variations may be made thereto in light of the above teachings. It is therefore to be understood that the invention may be practiced otherwise than as specifically described without departing from the scope of the appended claims.

## Claims

1. A non-asbestos friction material obtainable by molding and curing a composition comprising a fibrous base other than asbestos, a binder and a filler; wherein the fibrous base is composed in part of 1 to 15 vol % of inorganic fibers having a Mohs hardness of less than 4.5 and the filler includes 0.5 to 15 vol % of cashew dust, based on the overall composition.

2. A non-asbestos friction material obtainable by molding and curing a composition comprising a fibrous base other than asbestos, a binder and a filler; wherein the fibrous base is composed in part of inorganic fibers having a Mohs hardness of less than 4.5 in combination with inorganic fibers having a Mohs hardness of at least 4.5, and the filler includes 0.5 to 15 vol % of cashew dust, based on the overall composition.

3. The non-asbestos friction material of claim 2, wherein the inorganic fibers having a Mohs hardness of at least 4.5 account for up to 80 vol % of the combined amount of inorganic fibers having a Mohs hardness of less than 4.5 and inorganic fibers having a Mohs hardness of at least 4.5.

4. The non-asbestos friction material of claim 1 or 2, wherein the inorganic fibers having a Mohs hardness of less than 4.5 are of one or more type selected from among potassium titanate fibers, magnesium carbonate fibers, magnesium sulfate fibers and calcium carbonate fibers.

5. The non-asbestos friction material of claim 1 or 2, wherein the inorganic fibers having a Mohs hardness of at least 4.5 are of one or more type selected from among glass fibers, rock wool, ceramic fibers and metal fibers.

6. The non-asbestos friction material of claim 1 or 2, wherein the inorganic fibers have a length of 50 to 4,000 µm and a diameter of 5 to 60 µm.

7. A non-asbestos friction material obtainable by molding and curing a composition comprising a fibrous base other than asbestos, a binder and a filler; wherein the fibrous base comprises inorganic fibers having a Mohs hardness of less than 4.5, said fibers constituting 1 to 15 vol% of said composition; and the filler comprises cashew dust, said cashew dust constituting 0.5 to 15 vol% of said composition.

8. A non-asbestos friction material obtainable by molding and curing a composition comprising a fibrous base other than asbestos, a binder and a filler; wherein the fibrous base comprises inorganic fibers having a Mohs hardness of less than 4.5 in combination with inorganic fibers having a Mohs hardness of at least 4.5, and the filler comprises cashew dust, said cashew dust constituting 0.5 to 15 vol% of said composition.

9. A material as defined in claim 7 or claim 8 have the features specified in one or more of claims 3-6.

10. A method of producing a non-asbestos friction material comprising providing a composition as defined in any preceding claim and molding and curing it.
